# EUROPÄISCHE PATENTSCHRIFT

(11) **EP 2 035 517 B1**
(45) Veröffentlichungstag und Bekanntmachung des Hinweises auf die Patenterteilung: **01.01.2014**
(21) Anmeldenummer: 07764377.3
(22) Anmeldetag: 15.06.2007
(51) Int. Cl.: C09D 175/04

(54) **IN-MOLD-COATING VERFAHREN ZUR HERSTELLUNG VON FORMTEILEN UNTER VERWENDUNG WÄSSRIGER 2-KOMPONENTEN-LACKFORMULIERUNG**
IN-MOLD COATING METHOD FOR THE PRODUCTION OF MOLDED PARTS WITH THE AID OF AN AQUEOUS 2-COMPONENT LACQUER FORMULATION
PROCÉDÉ D'ENDUISAGE DANS LE MOULE POUR LA FABRICATION DE PIÈCES MOULÉES, À L'AIDE D'UNE PRÉPARATION DE VERNIS ACQUEUX À DEUX CONSTITUANTS

(30) Priorität: 05.07.2006 DE 102006031442
(43) Veröffentlichungstag der Anmeldung: 18.03.2009
(73) Patentinhaber: ISL-Chemie Gmbh&Co. Kg., 51515 Kürten-Herweg (DE)
(72) Erfinder: HENN, Joachim, 51709 Marienheide (DE); GRÖNEN, Jürgen, 51491 Overath (DE); BENDZKO, Norbert, 42499 Hückeswagen (DE); RIEDEL-BENDZKO, Birgit, 42499 Hückeswagen (DE); DÖRING, Patrik, 50354 Hürth (DE); VOGT, Marcus, 51067 Köln (DE)
(74) Vertreter: Lippert, Stachow & Partner
(86) Internationale Anmeldenummer: PCT/DE2007/001065
(87) Internationale Veröffentlichungsnummer: WO 2008/003282

(56) Entgegenhaltungen:
- EP-A- 1 704 928
- EP-A1- 0 798 299
- EP-A1- 0 928 799
- WO-A-2006/039430
- WO-A-2007/033030

## Beschreibung

Die Erfindung betrifft ein In-Mold-Coating Verfahren zur Herstellung von Formteilen unter Verwendung von wässrigen 2-Komponenten-Lackformulierungen, insbesondere 2-Komponenten-Polyurethan-Lackformulierungen, auf Basis von speziellen Isocyanat-funktionellen Härtergemischen und wasserverdünnbaren Harzen.

### Stand der Technik:

Automobilinnenraumteile wie beispielsweise Instrumententafeln, Türverkleidungen, Armlehnen, Kopfstützen oder Handschuhfächer bestehen heutzutage in der Regel aus einem mehrschichtigen Materialverbund, aufgebaut aus
a) einem harten Trägermaterial wie z.B. HoTz, Kunststoff oder Metall
b) einer geschäumten Polyurethan-Schicht
c) einer kompakten Polyurethan-Elastomerschicht und
d) einer UV-stabilen Deckbeschichtung.

So aufgebaute Automobilinnenraumteile weisen eine lederähnliche Oberflächenstruktur und einen angenehm weichen Griff auf. Eine detaillierte Beschreibung besonders vorteilhafter Herstellverfahren für Automobilinnenraumteile findet sich beispielsweise in der WO 93/23237, der EP-A 1 112 838, der WO 99/61216, der WO 98/333634.

Bei den in diesen Veröffentlichungen beschriebenen Verfahren wird in einem ersten Schritt eine Form mit der UV-stabilen Deckbeschichtung d) beschichtet. Nach Trocknung des Lackes wird die kompakte Polyurethan-Elastomerschicht c) als reaktive 2-Komponenten-Beschichtung, beispielsweise als Spritz- oder Gießbeschichtung, aufgebracht. Nach der Aushärtung wird eine beschichtete RIM-Polyurethanhaut erhalten, die der Form entnommen werden kann. Dieses Verfahren der Beschichtung von geformten Teilen im Allgemeinen oder Häuten im Besonderen wird als, In-Mold Coating' bezeichnet, wobei auch die verwendeten Lacke als ,In- Mold-Coatings' bezeichnet werden. Das erfindungsgemäße Verfahren umfasst insbesondere auch ein Verfahren mit diesen Merkmalen, sowie durch dieses Verfahren herstellbare oder hergestellte Bauteile.

Im weiteren Verlauf des Herstellverfahrens wird typischerweise in einer zweiten Form, ohne dass deren Verwendung wie z. B. im "One-Shoot-Verfähren" immer zwingend notwendig ist, auf die unbeschichtete Seite der Polyurethanhaut ein Polyurethanschaum b) aufgebracht, der durch Verbindung mit dem Trägermaterial a) die endgültige Formgebung des Bauteils, insbesondere eines Automobilinnenraumteils ergibt. Das erfindungsgemäße Verfahren kann insbesondere auch ein Verfahren mit diesen Merkmalen umfassen, sowie nach diesem Verfahren herstellbare oder hergestellte Bauteile.

Für die o. g. Verfahren geeignete In-Mold-Coatings d) zeichnen sich insbesondere durch eine gute Haftung zur Polyurethan-Elastomerschicht c) und durch eine gute Trennbarkeit von der Form aus. Besonders vorteilhaft ist es, wenn das In-Mold-Coating d) selbsttrennende Eigenschaften aufweist, so dass auf die Verwendung von externen Trennmitteln verzichtet werden kann. Weiterhin ist die Beständigkeit gegen Umwelteinflüsse wie UV-Strahlung, Wärme, Kälte, Abrieb und Chemikalien, insbesondere Reinigungsmittel, für die Qualität eines In-Mold Coatings d) wesentlich. Darüber hinaus ist es unter ökologischen Gesichtspunkten - insbesondere bei der Herstellung von Automobilteilen für den Innenraum - wichtig, dass die Beschichtungsmittel d) im wesentlichen frei von organischen Lösungsmitteln und Weichmachern sind. Die Verwendung lösemittelhaltiger Beschichtungssysteme erfordert zum einen umfangreiche und kostenintensive Maßnahmen der Abluftreinigung und zum anderen können gewisse Restmengen an Lösemittel oder Weichmacher aus der Beschichtung d) in die Elastomerschicht c) diffundieren, die dann später in den Automobilinnenraum zurückdiffundieren. Auf die Bedeutung der Verwendung wässriger In-Mold-Coatings wird speziell hingewiesen in der WO 98/333634, der WO 99/61216 oder der CA-A 2 413 493. In allen diesen Veröffentlichungen finden sich Hinweise darauf, dass insbesondere wässrige Polyurethan-Lacke aufgrund ihrer guten Haftung zur Herstellung der UV-stabilen Deckbeschichtung d) besonders geeignet sind.

Im Rahmen der technischen Realisierung der oben beschrieben Verfahren zur Serienfertigung von Automobilinnenraumteilen - insbesondere Polyurethanhäuten- hat sich aber gezeigt, dass die in den oben genannten Veröffentlichungen konkret beschriebenen wässrigen In-Mold-Coatings für die modernen Verarbeitungsverfahren der Automobilzuliefererindustrie nicht in idealer Weise geeignet sind. Das aktuelle Anforderungsprofil von beschichteten Polyurethanhäuten wird durch entsprechende Normen der Automobilindustrie spezifiziert wie beispielsweise der Daimler-Chrysler Norm DBL 5381. Die wässrigen Beschichtungssysteme des Standes der Technik genügen den Anforderungen der Automobilindustrie hinsichtlich ihrer Aushärtungsgeschwindigkeit, hinsichtlich ihrer Farbbeständigkeit und hinsichtlich ihrer chemischen Beständigkeit, insbesondere gegen Reinigungsmittel wie Glasreiniger, Fleckenentferner oder Kunststoffreiniger nicht in vollem Umfang.

Die WO 2006/039430 A beschreibt eine wässrige Beschichtungszusammensetzung für die äußersten Teile eines Fahrzeuges, welche eine Harzdispersion und einen Härter enthaltend Komponenten vom Isocyanurattyp und Iminooxadiazindiontyp umfasst.

Aufgabe der vorliegenden Erfindung ist daher die Bereitstellung eines wässrigen Lacksystems zur Verwendung als In-Mold-Coating, das bei ausreichend langer Verarbeitungszeit die Herstellung von Automobilinnenraumteilen mit erhöhter Taktzeit gestattet.

Diese Aufgabe konnte mit der Bereitstellung der nachstehend näher beschriebenen 2-Komponenten(2K)-Lackformulierungen auf Basis von speziellen Isocyanat-funktionellen Härtergemischen und wasserverdünnbaren Harzen gelöst werden.

Die Erfindung beruht auf der überraschenden Beobachtung, dass mit Hilfe spezieller neuartiger isocyanatfunktionelle Härtergemische 2K-Lacksysteme, insbesondere 2K-PUR-Lacksysteme, formuliert werden können, die im Vergleich zum Stand der Technik ein verfahrenstechnisch günstigeres Verhältnis von Verarbeitungszeit bei Umgebungstemperatur zu Härtungsgeschwindigkeit bei erhöhter Temperatur aufweisen, insbesondere eine längere oder gleiche Verarbeitungszeit bei erhöhter Härtungsgeschwindigkeit haben können. Gleichzeitig wurde gefunden, dass mit Hilfe der neuartigen Härtergemische Beschichtungen mit signifikant verbessertem Eigenschaftsniveau in Bezug auf Chemikalien- und Farbtonbeständigkeit im In-Mold-Coating-Verfahren hergestellt werden können.

Gegenstand der vorliegenden Erfindung ist daher ein In-Mold-Coating-Verfahren gemäß Anspruch 1 unter Verwendung wässriger 2-Komponenten-Lackformulierungen, insbesondere 2K-PUR-Lackformulierungen, enthaltend
A) 40 bis 90 Gew.-% (bezogen auf die Gesamtformulierung) mindestens einer wässrigen nichtfunktionellen oder hydroxyfunktionellen Harzdispersion,
B) 5 bis 40 Gew.-% (bezogen auf die Gesamtformulierung) mindestens einer Härterkomponente mit einem Gehalt an freien Isocyanatgruppen von 10 bis 23 Gew-% (bezogen auf das Festharz der Härterkomponente,
C) Füllstoffe, Pigmente, Hilfs- und Zusatzstoffe, wobei die Gew.-%-Angaben sich in 100 % ergänzen.
dadurch gekennzeichnet, dass die Komponente B) im wesentlichen aus Trimersiatgemischen auf Basis aliphatischer und/oder cycloaliphatischer Diisocyanate besteht, die anteilig Verbindungen vom Isocyanurattyp (Typ I) und Verbindungen vom Iminooxadiazindiontyp (Typ II) enthalten, wobei -bezogen auf die isomeren Trimerisatstrukturen I und II - mindestens 10 Gew.-% Verbindungen vom Iminooxadiazindiontyp (Typ II) enthalten sind.

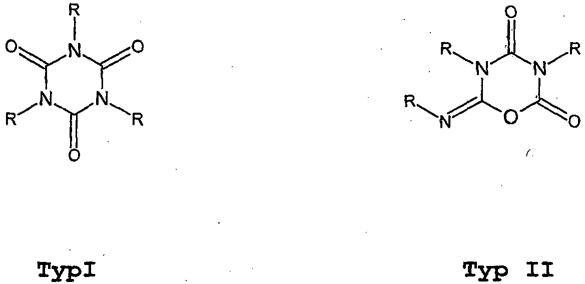

In dem erfindungsgemäßen Verfahren können somit die 2-Komponenten-Lackformulierungen unter Ausbildung einer Beschichtung, insbesondere Oberflächenbeschichtung, auf das Formteil aufgebracht und unter Herstellung einer Lackbeschichtung ausgehärtet werden. Die Aufbringung der Lackformulierung kann hierbei im In-Mold-Coating Verfahren erfolgen, wobei zunächst die Lackformulierung vor den das Formteil bildenden Komponenten in die Form eingebracht werden kann.

Die erfindungsgemäß als Komponente B) einzusetzenden isocyanat-funktionellen Härterkomponenten sind prinzipiell bekannt und werden beispielhaft beschrieben in den deutschen Offenlegungsschriften DE 196 11 849 A1, DE 198 24 485 A1, DE 19532060 A1 sowie DE 19824490 A1. In diesen Veröffentlichungen, deren Offenbarungsgehalt hiermit durch Inbezugnahme mit umfasst ist, wird auch die Verwendung als Härter für wässrige Lacksysteme erwähnt, wobei sich aber keinerlei Hinweise auf Aufgabe oder Lösung des der Erfindung zugrunde liegenden Problems, insbesondere nicht auf Reaktionsgeschwindigkeiten oder verbesserte Lackeigenschaften, aus diesen Veröffentlichungen ableiten lassen. Die in den genannten Veröffentlichungen konkret beschriebenen Eigenschaftsverbesserungen betreffen lediglich den Lackrohstoff an sich, nicht jedoch die Eigenschaften daraus herstellbarer Lacksysteme.

Die einzelnen Reste R der einzelnen Verbindungen vom Typ I oder . Typ II können jeweils gleich oder verschieden sein und leiten sich von den zugrunde liegenden aliphatischen und/oder cycloaliphatischen Diisocyanaten bzw. deren Oligomeren ab.

Als Komponente A) enthält die erfindungsgemäße 2-Komponenten-Lackformulierung mindestens eine wässrige, nichtfunktionelle oder hydroxyfunktionelle Harzdispersion. Als Komponente A) können in den erfindungsgemäßen Beschichtungsmitteln insbesondere sämtliche in der wässrigen 2-Komponenten-Polyurethanbeschichtungstechnologie üblichen Harz-Dispersionen eingesetzt werden. Derartige wässrige Dispersionen und deren Verwendung als Bindemittel in wässrigen 2-Komponenten-Polyurethanlacksystemen sind prinzipiell bekannt. Es handelt sich beispielsweise um die üblichen wässrigen oder in Wasser dispergierbaren Polyesterharze, Polyacrylatharze, Polyurethanharze, Polyharnstoffharze oder Polycarbonatharze, wie sie beispielsweise in EP-A 358 979, EP-A 469 389, EP-A 496 205, EP-A 557 844, EP-A 583 728, WO 94/03511, WO 94/20559, WO 94/28043 und WO 95/02005 beschrieben sind. Auch der Einsatz beliebiger Mischungen verschiedener Dispersionen ist möglich oder der Einsatz sogenannter Hybriddispersionen, bei denen verschiedene Bindemittel der oben genannten Art bereits während der Herstellung kombiniert werden.

Bei der Lackierung von Automobilinnenraumteilen kommen insbesondere Lacksysteme zum Einsatz die einen "Softfeel-Effekt", d.h. ein besonderes Griffempfinden (Haptik) der lackierten Oberfläche vermitteln. Diese Haptik lässt sich mit Begriffen wie samtig, weich, gummiartig oder warm umschreiben, während sich z.B. die Oberfläche einer lackierten Auto-Karosserie oder auch eine unlackierte oder mit einem üblichen Klar- oder Decklack beschichtete Kunststoff-Platte (z.B. ABS, PC, oder PMMA) kalt und glatt anfühlt. Eine geeignete Haptik lässt sich insbesondere durch den Einsatz von Polyesterdispersionen und/oder Polyurethandispersionen als Komponente A) der erfindungsgemäßen 2-Komponenten-Lackformulierung erzielen, weswegen der Einsatz von Polyesterdispersionen und/oder Polyurethandispersionen als Komponente A) bevorzugt ist. Besonders bevorzugt werden als Komponente A) Polyurethandispersionen eingesetzt.

Besonders bevorzugt als Komponente A) einsetzbare nichtfunktionelle, d.h. hydroxylgruppenfreie Polyurethandispersionen werden beispielhaft beschrieben in der DE-A 2 651 506 (S. 6, Z. 1 - 13) oder in der DE-A 1 570 615 (S. 2, Z. 9 - S. 3, Z. 3). Weiterhin besonders bevorzugt einsetzbar als Komponente A) sind wässrige Polyester-Polyurethan-Dispersionen wie sie in der EP-A 0 496 205 oder der EP-A 0 669 352 beschrieben sind. Besonders vorteilhaft einsetzbar sind auch die in der EP-A 1 418 192 beschrieben Polyurethandispersionen mit hohem Polycarbonatanteil. Diese Dispersionen sind hiermit durch Inbezugnahme von der Erfindung mit umfasst.

Hydroxifunktionelle Harzdispersionen, die im Zusammenhang mit dieser Erfindung besonders vorteilhaft einsetzbar sind, und die hiermit mit umfasst sind, sind in der EP 994 136 A1 beschrieben.

Bezogen auf das Gesamtgewicht der gebrauchsfertigen erfindungsgemäßen Lackformulierung beträgt die Menge an Komponente A) typischerweise 40 bis 90 Gew.-%, vorzugsweise 50 bis 80 Gew.-%, insbesondere 60 - 70 Gew.-%.

Als Komponente B) enthält die erfindungsgemäße 2-Komponenten-Lackformulierung, insbesondere 2K-PUR-Lackformulierung, eine Härterkomponente mit einem Gehalt an freien Isocyanatgruppen von 10 bis 23 Gew.-%, -bezogen auf das Festharz der Härterkomponente-, die im wesentlichen aus Trimerisatgemischen auf Basis aliphatischer und/oder cycloaliphatischer Diisocyanate besteht, die anteilig Verbindungen vom Isocyanurattyp (Typ I) und Verbindungen vom Iminooxadiazindiontyp (Typ II) enthalten, wobei - bezogen auf die isomeren Trimerisatstrukturen - mindestens 10 % Verbindungen vom Iminooxadiazindiontyp (Typ II) enthalten sind. Die Härterkomponente kann zu ≥ 75 Gew.-%, vorzugsweise ≥ 80 90 Gew.-%, insbesondere ≥ 95 - 98 Gew.-%, aus dem Trimerisatgemisch oder aus den genannten Verbindungen vom Typ I und Typ II (in Summe) bestehen.

Erfindungsgemäß als Komponente B) einsetzbare isocyanatfunktionelle Härterkomponenten sind prinzipiell bekannt und werden beispielhaft beschrieben in den deutschen Offenlegungsschriften DE 196 11 849 A1, DE 198 24 485 A1, DE 19532060 A1 sowie DE 19824490 A1. Derartige Polyisocyanatgemische werden durch Cyclotrimerisierung von aliphatischen und/oder cycloaliphatischen Diisocyanaten unter Zuhilfenahme spezieller in den oben zitierten Veröffentlichungen näher beschriebenen Katalysatoren hergestellt und enthalten im Wesentlichen Trimerisatstrukturen vom Typ I und Typ II. Erfindungsgemäß als Komponente B) einsetzbare isocyanatfunktionelle Härterkomponenten können enthalten -bezogen auf die isomeren Trimerisatstrukturen - mindestens 5-10 Gew.-%, vorzugsweise mindestens 15 Gew.-%, besonders bevorzugt mindestens 20 Gew.-% Verbindungen vom Iminooxadiazindiontyp (Typ II). Die erfindungsgemäß als Komponente B) einsetzbaren Polyisocyanate können beispielsweise durch Cyclotrimerisation gemäß der Lehre der oben zitierten Veröffentlichungen hergestellt werden oder durch Abmischung derartiger Polyisocyanate mit konventionellen Polyisocyanaten mit Isocyanuratstruktur hergestellt werden. Konventionelle Polyisocyanate mit Isocyanuratstruktur werden beispielhaft beschrieben in J. Prakt. Chem. 336 (1994) S. 185-200. Die Verfahren zur Herstellung geeigneter Lackpolyisocyanate werden beispielhaft beschrieben in den US-Patentschriften 3 124 605, 3 358 010, 3 903 126, 3 903 127, 3 976 622 oder 4 324 879.

Die Verbindungen vom Typ I und Typ II können insbesondere im Verhältnis 10:1 bis 1:1, beispielsweise 8:1 bis 3:1 oder bis 4:1 oder bis 5:1 in der Komponente B oder der Lackformulierung vorliegen, beispielsweise auch in dem Verhältnis von 85:15 bis 75:25 oder von 85:15 bis 80:20.

Besonders bevorzugt einsetzbar sind Polyisocyanatgemische, die den oben gemachten Angaben entsprechen und hydrophil modifiziert sind. Die hydrophile Modifizierung der o. g. Lackpolyisocyanate kann anionisch, kationisch oder nichtionisch über interne oder externe Emulgatoren erfolgen. Verfahren zur hydrophilen Modifizierung werden z.B. in den Patentschriften EP-A 443 138, EP-A 469 389, EP-A 486 881, EP-A 510 438, EP-A 540 985, EP-A 645 410, EP-A 697 424 oder EP-A 728 785 beschrieben, deren Offenbarungsgehalt hiermit mit umfasst ist.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z. 55- S. 4 Z. 5) beschrieben. Gut geeignet sind auch Allophanatgruppen enthaltende Polyisocyanate,wie beispielhaft beschrieben in der EP-A-0 959 087 (S. 3, Z 39 - 51), die durch Umsetzung monomerenarmer Polyisocyanate mit Polyethylenoxidpolyetheralkoholen unter Allophanatisierungsbedingungen hergestellt werden können, sowie mit ionischen Gruppen hydrophilierte Polyisocyanate, wie sie z.B. in der EP-A 1 287 052-A1 beschrieben sind. Ebenso möglich ist die Hydrophilierung durch Zusatz handelsüblicher externer Emulgatoren der in der EP-A 835 889 beispielhaft genannten Art. Weiterhin ist es auch möglich und vielfach sogar vorteilhaft, Gemische hydrophil modifizierter Lackpolyisocyanate mit unmodifizierten Lackpolyisocyanaten einzusetzen. In diesen Gemischen übernehmen die hydrophil modifizierten Lackpolyisocyanate die Funktion eines externen Emulgators.

Bezogen auf das Gesamtgewicht der gebrauchsfertigen erfindungsgemäßen Lackformulierung beträgt die Menge an Komponente B) typischerweise 5 bis 40 Gew.-%, vorzugsweise 10 bis 30 Gew.-%, besonders bevorzugt 15 bis 25 Gew.-%.

Die erfindungsgemäße Lackformulierung enthält vorzugsweise weniger als 25 Gew.-% oder weniger als 10-20 Gew.-%, besonders bevorzugt ≤ 8 Gew.-% oder ≤ 5 Gew.-% (bezogen auf die Gesamtformulierung) Füllstoffe, Pigmente, Hilfs- und Zusatzstoffe in Summe. Unter Umständen kann die Formulierung somit auch mehr als 5 Gew.-% der genannten Stoffe enthalten.

Die erfindungsgemäßen Lackformulierungen enthalten als Komponente C) die aus der wässrigen Lacktechnologie an sich bekannten Füllstoffe, Pigmente, Hilfs- und Zusatzstoffe in einer Menge von beispielsweise 1-20 Gew.-%, vorzugsweise 3-10 Gew.-%, besonders bevorzugt 2-5 Gew.-% bezogen auf das Gesamtgewicht der gebrauchsfertigen Lackformulierung.

Genannt seien beispielsweise organische und anorganische Pigmente, gegebenenfalls oberflächenbehandelte Füllstoffe, Trennmittel, Entschäumer, Verdicker, Verlaufshilfsmittel, Mattierungsmittel, Dispergierhilfsmittel, Stabilisatoren und/oder Hydrolyseschutzmittel der in der Lacktechnologie allgemein bekannten Art. Farbgebende Pigmente werden vorzugsweise in Form von Farbpasten verwendet. Auch organische Lösungsmittel können in untergeordneten Mengen bei der Herstellung der erfindungsgemäßen Lackformulierungen mitverwendet werden. Dies sind insbesondere die in der wässrigen Lacktechnologie bekannten Colöser wie z.B. N-Methylpyrolidon, Propylencarbonat, Propylenglykoldiacetat oder Methoxypropylacetat.

Als weiterer Bestandteil der Komponente C) seien Katalysatoren genannt. Hierbei sind prinzipiell alle aus der Polyurethantechnologie bekannten metallorganischen oder aminischen Katalysatoren geeignet. Die Katalysatoren können auch der Harzdispersion zugemischt sein. Bevorzugt einsetzbar als Bestandteil der Komponente C) sind aminische Katalysatoren, die mindestens ein tertiäres Stickstoffatom und mindestens eine Hydroxylgruppe enthalten. Gegebenenfalls können auch zwei, drei oder mehr tertiäre Stickstoffatome enthalten sein. Gebebenenfalls können auch zwei, drei oder mehr Hydroxylgruppen enthalten sein. Derartige Katalysatoren sind aus der Polyurethantechnologie prinzipiell bekannt und werden üblicherweise als Reaktivkatalysatoren bezeichnet. Beispiele für bevorzugte Katalysatoren sind Alkylalkanolamine, die abgeleitet sein können von Ethanolamin, Propanolamin oder iso-Propanolamin wie N-Methyl- oder N-Ethyldiethanolamin, N,N-Dimethyl- oder N,N-Diethylethanolamin, N-Methyldipropanolamin, N-Methyldiisopropanolamin, N,N-Dimethylpropanolamin, 2-(2-Dimethylaminoethoxy)ethanol oder N,N-Dimethylisopropanolamin. Die Alkylgruppen, die gleich oder verschieden sein können, können C1 - C6, vorzugsweise C1-C4 oder C1-C3 Gruppen sein, insbesondere Methyl oder Ethyl. Besonders bevorzugt einsetzbar als Bestandteil der Komponente C) sind aber aminische Katalysatoren, die mindestens zwei tertiäre Stickstoffatome und mindestens eine Hydroxylgruppe aufweisen. Das Molekulargewicht beträgt vorzugsweise ≥ 140g/mol. Beispiele für bevorzugt einsetzbare Katalysatoren sind N-(3-Dimethylamino-propyl)-N,N-diisopropanolamin, N,N,N'-Trimethyl-N'-hydroxyethyl-bisaminoethylether, N,N-bis(3-dimethylaminopropyl)-N-isopropanolamin, oder N,N,N'-trimethylaminoethyl-ethanolamin-ethylendiamin.

Es versteht sich, dass die Komponenten i) und ii) jeweils eine oder ein Gemisch mehrerer der genannten Verbindungen enthalten können.

Die aminischen Reaktivkatalysatoren werden üblicherweise in einer Menge von 0,2 Gew.-% bis 2,0 Gew.-%, vorzugsweise 0,5 Gew.-% bis 1,5 Gew.-%, (bezogen auf das Gesamtgewicht der Komponente A) eingesetzt.

Die Lackformulierung kann auch mindestens eine polyfunktionelle Aziridin-Verbindung als Vernetzer enthalten, der der Komponente A zugemischt sein kann.

Darüber hinaus kann die Komponente C) ein internes Trennmittel enthalten. Bei Zusatz eines Trennmittels sind die Lackformulierungen selbsttrennend ausgerüstet, so dass auf die Ausrügstung der Form mit externen Trennmitteln verzichtet werden kann. Geeignete Trennmittel sind alle für wässrige Lacksysteme beschriebenen Trennmittel auf Wachs- und/oder Silikonbasis, insbesondere solche der in der WO 99/61215 näher beschriebenen Art. Es ist bevorzugt, mindestens ein internes Trennmittel einzusetzen.

Üblicherweise werden die verschiedenen Bestandteile der Komponente C) mit Hilfe der in der Lacktechnologie üblichen Verfahren, wie z.B. Dispergierung in die Komponente A) eingearbeitet, wobei der sog. Stammlack entsteht. Prinzipiell ist es aber auch möglich, bestimmte Bestandteile der Komponente C) in die Komponente A) oder B) einzuarbeiten.

Vorzugsweise ergänzen sich die Gehalte der Komponenten A), B) und C) zu 100 Gew.-%.

Die erfindungsgemäße Lackformulierung enthält vorzugsweise weniger als insgesamt 10 Gew.-% organische Lösungsmittel und Weichmacher.

Die Komponente A) kann einen Festkörpergehalt zwischen 25 und 60 Gew.-%, insbesondere zwischen 30 und 50 Gew.-% aufweisen.

Vorzugsweise enthält die Komponente B) -bezogen auf die isomeren Trimerisatstrukturen - mindestens 15 % Verbindungen vom Iminooxadiazindiontyp (Typ II).

Im Rahmen der vorliegenden Erfindung wurde die überraschende Beobachtung gemacht, das Lacke die die erfindungsgemäße Isocyanatkomponente B) enthalten, einerseits eine lange Verarbeitungszeit aufweisen und andererseits unter den Bedingungen der maschinellen Verarbeitung deutlich kürzere Takt- oder Zykluszeiten beim In-Mold-Coating Verfahren ermöglichen, was auf eine deutlich schnellere Aushärtung unter den Prozessbedingungen gegenüber Lacken auf Basis konventioneller Trimersiate mit Isocyanuratstruktur (Typ I) zurückgeführt wird. Überraschenderweise zeigen insbesondere erfindungsgemäße Lackformulierungen, die die oben genannten Katalysatoren, insbesondere die bevorzugten Reaktivkatalysatoren, enthalten, dieses günstige Verhältnis von guter Lagerstabilität einerseits und sehr schneller Aushärtung bei kurzzeitiger Erwärmung andererseits.

Der Stammlack weist in der gebrauchsfertigen Form eine ausgezeichnete Lagerstabilität bei Raumtemperatur (20°C) von ca. 6 Monaten auf.

Vorzugsweise wird unmittelbar vor der Applikation die Polyisocyanat-Komponente B) in den Stammlack eingearbeitet. In Abhängigkeit von der Hydrophilie der Komponente B) kann es dabei vorteilhaft sein, zunächst unter Scherung eine wässrige Dispersion der Komponente B) herzustellen und diese dann mit dem Stammlack zu vermischen. Nach Vermischen des Stammlacks mit der Komponente B) hat der Lack eine Verarbeitungszeit von ca. 3-6 Stunden. Die Vermischung kann dabei entweder manuell oder aber bevorzugt unter Verwendung konventioneller Mischaggregate erfolgen.

Die erfindungsgemäßen Lacksysteme sind aufgrund ihrer schnellen Härtungsgeschwindigkeit bei Temperaturerhöhung hervorragend zur Verwendung als ,In-Mold Coating' bei der Herstellung von Formteilen aller Art geeignet. Aufgrund der ausgezeichneten maschinellen Verarbeitbarkeit sind die erfindungsgemäßen Lackformulierungen besonders gut zur Herstellung von Automobilteilen, insbesondere von Automobilinnenraumteilen geeignet.

Bei der maschinellen Verarbeitung kann das Aufbringen der erfindungsgemäßen Lackformulierungen auf die Form durch Spritzapplikation mit Hilfe von Robotern oder konventionellen Spritzpistolen erfolgen. Die Trocknung des Lackes erfolgt durch kurzzeitige Erwärmung auf Temperaturen von maximal 80°C, bevorzugt maximal 70°C. Die Trocknungszeit ist extrem kurz und beträgt üblicherweise nicht mehr als 4 Minuten, bevorzugt nicht mehr" als 3 Minuten. Durch die erfindungsgemäße Lackformulierung kann die Trocknungszeit nach Aufbringung einer Lackierung von 10 bis 100 µm, typischerweise 30 bis 60 µm, beispielsweise ca. 50 µm, in die Form und gegebenenfalls nach einer geeigneten Ablüftzeit üblicherweise nicht mehr als 4 Minuten betragen, bevorzugt nicht mehr als 3 Minuten, beispielsweise 2 Minuten. Die Ablüftzeit kann bei stehender Luft und bei offener Form vorzugsweise nicht mehr als 150 bis 200 sec, beispielsweise 100 sec betragen. Gegebenenfalls kann die Ablüftung alternativ oder zusätzlich auch nach dem Trocknungsschritt erfolgen. Nach der Trocknung des ,In-Mold Coatings' kann beispielsweise im Rahmen des RIM-Verfahrens eine schnellreagierende kompakte oder schäumende Polyurethanformulierung des Standes der Technik in die lackierte Form eingebracht und durch Wärmebehandlung zu einem Formteil ausgehärtet werden. Nach Aushärtung mit einer Aushärtungszeit von 90 bis 150 sec, beispielsweise ca. 120 sec, kann das lackierte Formteil entnommen werden und seiner weiteren Verwendung zugeführt werden. Hierdurch können Formteile mit fehlerlosen Oberflächen hergestellt werden.

Die Aushärtungszeit wird hierbei auch von dem Katalysatorgehalt mitbestimmt, der andererseits aber auch die Verarbeitungszeit beeinflusst. Die erfindungsgemäße Lackformulierung kann somit derart eingestellt sein, dass bei der genannten Aushärtungszeit eine Verarbeitungszeit von ≥ 225 min, vorzugsweise ≥ 250 min, beispielsweise ca. 300 min oder mehr resultiert.

Bevorzugt werden die erfindungsgemäßen Lackformulierungen aber zur Herstellung von Polyurethan-Häuten verwendet. Das Verfahren zur Herstellung solcher Polyurethan-Häute zur Verwendung im Automobilinnenraum entspricht dem Stand der Technik und kann analog der in den WO 93/23237, EP-A 1 112 838, WO 99/61216 und WO 98/333634 beschriebenen Verfahren erfolgen, die von der vorliegenden Erfindung mit umfasst sind. Die unter Verwendung der erfindungsgemäßen Lackformulierungen erhaltenen Polyurethan-Häute haben eine optisch vollkommen, homogene Oberfläche und weisen einen angenehmen Griff auf. Die Oberfläche besitzt eine gute Alterungs- Abrieb und UV-Beständigkeit sowie eine im Vergleich zum Stand der Technik verbesserte Beständigkeit gegenüber Reinigungsmitteln wie Glasreinigern, Fleckenentfernern oder Kunststoffreinigern. Darüber hinaus erwähnenswert ist die verbesserte Farbtonbeständigkeit im Vergleich zum Stand der Technik.

Das Wesen der Erfindung wird durch die nachfolgenden Beispiele näher erläutert.

### Beispiele:

In den nachfolgenden Beispielen beziehen sich alle Angaben in Teilen oder % auf das Gewicht. Der pigmentierte Stammlack wird durch sukzessives Vermischen der Komponenten bei niedriger Rührgeschwindigkeit in einem handelsüblichen Dissolver hergestellt.

Die Isocyanatkomponente wurde dem pigmentierten Stammlack unmittelbar vor der Verarbeitung zugesetzt und durch Vermischen bei niedriger Rührgeschwindigkeit in einem handelsüblichen Dissolver eingearbeitet.

### Beispiel 1 (erfindungsgemäß)

### Herstellung eines Stammlackes

| | |
|---|---|
| 87,5 % | Alberdingk U 420 (handelsübliches Lackbindemittel der Fa. Alberdingk & Boley, Krefeld, Festkörpergehalt 40%) |
| 0,3 % | Butylglykol |
| 0,3% | Hexylglykol |
| 1,8 % | deionisiertes Wasser |
| 0,2 % | Foamex 825 (handelsüblicher Entschäumer der Fa. Goldschmidt) |
| 1,0% | Jeffcat ZR 50 (N,N-bis(3-dimethylaminopropyl)-N-isopropanolamin, Katalysator der Fa. Huntsman, Everberg, Belgien) |
| 2,9% | Mattierungspaste auf Basis Acemat OK 412 der Fa.Degussa |
| ca. 6% | deionisiertes Wasser (Verarbeitungsviskosität =15 sec (Fordbecher, 4mm)) |

### Herstellung eines erfindungsgemäßen In-Mold-Coatings:

Zur Herstellung eines erfindungsgemässen In-Mold-Coatings wurde der Stammlack mit 8 Gew.-% einer grauen Pigmentpräparation auf Basis von Ruß und Titandioxid pigmentiert.

Die Härterkomponente wurde hergestellt durch Abmischung von 45 Gew.-Teilen eines handelsüblichen wasserdispergierbaren Isocyanuratpolyisocyanatgemisches auf Basis Hexamethylendiisocyanat (Bayhydur LS 2319, Bayer Material Science, Leverkusen, NCO-Gehalt = 18,0 %), 20 Gew. Teilen eines lösemittelfreien Polyisocyanatgemisches auf Basis Hexamethylendiisocyanat hergestellt gemäß DE 19611849 A1, enthaltend Verbindungen vom Isocyanurattyp (Typ I) und Verbindungen vom Iminooxadiazindiontyp (Typ II) im Verhältnis von 50: 50 (Desmodur XP 2410, Bayer Material Science, Leverkusen, NCO-Gehalt 24,0 % Viskosität 700 mPa.s/23°C) und 35 Gew.-Teilen Propylencarbonat vermischt. Nach Maßgabe einer ¹³C-NMR-spektroskopischen Analyse enthält die Härtermischung Isocyanuratstrukturen (Typ I) und Iminooxadiazindionstrukturen (Typ II) im Verhältnis von 80:20.

100 Gew.-Teile des so hergestellten Stammlackes wurden mit 20 Gew.-Teilen des so hergestellten Härtergemisches vermischt. Der Lack hatte eine ausreichend lange Verarbeitungszeit von 300 Minuten (23°C).

Eine mit Trennmittel (Acmos 3641-82 der Fa. Acmos Chemie Bremen) beschichtete Form (Formtemperatur 80°C) wurde durch Spritzauftrag mit dem frisch hergestellten erfindungsgemäßen In-Mold-Coating beschichtet, so dass eine Trockenfilmstärke von 30-60 µm resultierte. Die Trocknungszeit kann 3 min betragen.

Zur Herstellung einer Polyurethanhaut wurde nach einer Ablüftzeit von 100 Sekunden bei offener Form ein handelsübliches 2-Komponenten-Polyurethan-System zur Herstellung von Polyurethanhäuten (Elastoskin 4639/107 mit ISO 134/31 der Fa. Elastogran, Lemförde) in die Form eingebracht und die Form wurde geschlossen. Nach 120 Sekunden Aushärtungszeit konnte die lackierte Haut problemlos entnommen werden.

Die Abprüfung der so hergestellten Haut erfolgte in Anlehnung an die Richtlinie DBL 5381.

Die Prüfergebnisse sind in Tabelle 1 zusammengestellt.

### Beispiel 2 (erfindungsgemäß)

Der Stammlack wurde wie in Beispiel 1 beschrieben hergestellt, als Katalysator wurden aber 0,8 % Jeffcat DPA (3-Dimethylaminopropylamino-1,1'-bis-(propan-2-ol) Katalysator der Fa. Huntsman, Everberg, Belgien) anstelle von Jeffcat ZR 50 eingesetzt.

Zur Herstellung eines erfindungsgemäßen In-Mold-Coatings wurde der Stammlack mit 8 Gew.-% einer grauen Pigmentpräparation auf Basis von Ruß und Titandioxid pigmentiert.

Die Härterkomponente wurde hergestellt durch Abmischung von 45 Gew.-Teilen eines handelsüblichen wasserdispergierbaren Polyisocyanatgemisches auf Basis Hexamethylendiisocyanat (Bayhydur 3100, Bayer Material Science, Leverkusen, NCO-Gehalt = 17,5 %), 20 Gew. Teilen eines lösemittelfreien Polyisocyanatgemisches auf Basis Hexamethylendiisocyanat hergestellt gemäß DE 19611849 A1, enthaltend Verbindungen vom Isocyanurattyp (Typ I) und Verbindungen vom Iminooxadiazindiontyp (Typ II) im Verhältnis von 50: 50 (Desmodur XP 2410, Bayer Material Science, Leverkusen, NCO-Gehalt 24,0 % Viskosität 700 mPa.s/23°C ) und 35 Gew.-Teilen Propylencarbonat. Nach Maßgabe einer ¹³C-NMRspektroskopischen Analyse enthält die Härtermischung Isocyanuratstrukturen (TypI) und Iminooxadiazindionstrukturen (TypII) im Verhältnis von 82:18.

100 Gew.-Teile des so hergestellten Stammlackes wurden mit 25 Gew.-Teilen des so hergestellten Härtergemisches vermischt. Der Lack hatte eine ausreichend lange Verarbeitungszeit von 250 Minuten (23°C).

Die Herstellung einer beschichteten Polyurethanhaut erfolgte wie in Beispiel 1 beschrieben. Die beschichtete Polyurethanhaut konnte nach Aushärtung unter den Bedingungen des Beispiels 1 (Formtemperatur 80°C, Ablüftzeit 100 sec, Aushärtungszeit 120 sec) problemlos entnommen werden.

Die Prüfergebnisse sind in Tabelle 1 zusammengestellt.

### Beispiel 3 (erfindungsgemäß)

### Herstellung eines Stammlacks

| | |
|---|---|
| 87,5 % | Synthoester DSP-2002-248 |
| | (wässriges OH-funktionelles Bindemittel der Fa. Synthopol Chemie, Buxtehude auf Polyester-Polyurethanbasis, OH-Zahl 67) |
| 0,3 % | Butylglycol |
| 0,3 % | Hexylglykol |
| 1,8 % | deionisiertes Wasser |
| 0,2 % | Foamex 825 (handelsüblicher Entschäumer der Tego Chemie Service GmbH, Essen) |
| 1,0 % | Jeffcat ZR 50 (N,N-bis(3-dimethylaminopropyl)-N-isopropanolamin, Katalysator der Fa. Huntsman, Everberg, Belgien) |
| 2,9 % | Mattierungspaste Acemat OK 412 der Fa. Degussa |
| 2,0 % | wässriges Trennmittel hergestellt gemäß WO 9961215, Beispiel 2 |
| ca. 4 % | deionisiertes Wasser (Verarbeitungsviskosität =15 sec (Fordbecher, 4mm)). |

Zur Herstellung eines erfindungsgemäßen In-Mold-Coatings wurde der Stammlack mit 8 Gew.-% einer grauen Pigmentpräparation auf Basis von Ruß und Titandioxid pigmentiert.

Die Härterkomponente wurde hergestellt durch Abmischung von 25 Gew.-Teilen eines handelsüblichen, nichtionisch hydrophilierten, wasserdispergierbaren Polyisocyanatgemisches auf Basis Hexamethylendiisocyanat (Bayhydur VP-LS 2319, Bayer Material Science, Leverkusen, NCO-Gehalt = 18,0 %), 20 Gew.-Teilen eines ionisch hydrophilierten, wasserdispergierbaren Polyisocyanatgemisches auf Basis Hexamethylendiisocyanat (Bayhydur XP 2487/1, Bayer Material Science, Leverkusen, NCO-Gehalt 20,9% Viskosität 6900 mPa.s) 20 Gew.-Teilen eines lösemittelfreien Polyisocyanatgemisches auf Basis Hexamethylendiisocyanat hergestellt gemäß DE 19611849 A1, enthaltend Verbindungen vom Isocyanurattyp (Typ I) und Verbindungen vom Iminooxadiazindiontyp (Typ II) im Verhältnis von 50: 50 ((Desmodur XP 2410, Bayer Material Science, Leverkusen, NCO-Gehalt 24,0 % Viskosität 700 mPa.s/23°C ) und 35 Gew.-Teilen Propylencarbonat. Nach Maßgabe einer ¹³C-NMR-spektroskopischen Analyse enthält die Härtermischung Isocyanuratstrukturen (TypI) und Iminooxadiazindionstrukturen (TypII) im Verhältnis von 83:17.

100 Gew.-Teile des so hergestellten Stammlackes wurden mit 20 Gew.-Teilen des so hergestellten Härtergemisches vermischt. Der Lack hatte eine ausreichend lange Verarbeitungszeit von 300 Minuten (23°C).

Die Herstellung einer beschichteten Polyurethanhaut erfolgte wie in Beispiel 1 beschrieben, jedoch wird die Form nicht mit einem Trennmittel beschichtet. Die beschichtete Polyurethanhaut konnte nach Aushärtung unter den Bedingungen des Beispiels 1 (Formtemperatur 80°C, Ablüftzeit 100 sec, Aushärtungszeit 12.0 sec) problemlos entnommen werden.

Die Prüfergebnisse sind in Tabelle 1 zusammengestellt.

### Beispiel 4

### Nicht erfindungsgemäßes Vergleichsbeispiel

Der Stammlack aus Beispiel 1 wurde mit einer Härtermischung auf Basis konventioneller Trimerisat-Polyisocyanate mit Isocyanuratstruktur kombiniert.

Die Härterkomponente wurde hergestellt durch Abmischung von 45 Gew.-Teilen eines handelsüblichen, nichtionisch hydrophilierten, wasserdispergierbaren Polyisocyanatgemisches auf Basis Hexamethylendiisocyanat (Bayhydur VP-LS 2319, Bayer Material Science, Leverkusen, NCO-Gehalt = 18,0 %), 20 Gew.-Teilen eines lösemittelfreien Polyisocyanatgemisches auf Basis Hexamethylendiisocyanat mit Isocyanuratstruktur (Typ I) (Desmodur N 3300, Bayer Material Science, NCO-Gehalt 21,5 %, Viskosität 3000mPas/23°C) und 35 -Gew.-Teilen Propylencarbonat. Nach Maßgabe einer ¹³C-NMR-spektroskopischen Analyse enthält die Härtermischung keine Iminooxadiazindionstrukturen (TypII).

100 Gew.-Teile des so hergestellten Stammlackes wurden mit 20 Gew.-Teilen des so hergestellten Härtergemisches vermischt. Der Lack hatte eine für die Praxis nicht ausreichende Verarbeitungszeit von nur 150 Minuten (23°C).

Die Herstellung einer beschichteten Polyurethanhaut erfolgte wie in Beispiel 1 beschrieben. Die beschichtete Polyurethanhaut konnte nach Aushärtung unter den Bedingungen des Beispiels (Formtemperatur 80°C, Ablüftzeit 100 sec, Aushärtungszeit 120 sec) problemlos entnommen werden.

Die Prüfergebnisse sind in Tabelle 1 zusammengestellt.

### Beispiel 5

### Nicht erfindungsgemäßes Vergleichsbeispiel

Es wurde ein Stammlack wie in Beispiel 4 formuliert, jedoch wurde die Katalysatormenge Jeffcat ZR 50 auf 0,6% reduziert, um die Verarbeitungszeit auf praxistaugliche Werte zu verlängern. Der verarbeitungsfertige Lack hatte eine ausreichend lange Verarbeitungszeit von 240 Minuten. Die Herstellung einer beschichteten Polyurethanhaut erfolgte wie in Beispiel 1 beschrieben. Der Lack war unter diesen Bedingungen noch nicht ausgehärtet, bei Entnahme der Polyurethanhaut kam es zur partiellen Lackablösung.

### Beispiel 6

### Nicht erfindungsgemäl3es Vergleichsbeispiel

Der Stammlack aus Beispiel 1 wurde mit einer Härtermischung auf Basis konventioneller Trimerisat-Polyisocyanate mit Isocyanuratstruktur kombiniert.

Die Härterkomponente wurde hergestellt durch Abmischung von 45 Gew.-Teilen eines handelsüblichen, nichtionisch hydrophilierten, wasserdispergierbaren Polyisocyanatgemisches auf Basis Hexamethylendiisocyanat (Bayhydur VP-LS 2319 der Bayer Material Science, Leverkusen, NCO-Gehalt = 18,0 %), 20 Gew.-Teilen eines lösemittelfreien Polyisocyanatgemisches auf Basis Hexamethylendiisocyanat mit Isocyanuratstruktur (Typ I) (Desmodur N 3600 der Bayer AG Zeverkusen, NCO-Gehalt 23 %) und 35 Gew.% Teilen Propylencarbonat. Nach Maßgabe einer ¹³C-NMR-spektroskopischen Analyse enthält die Härtermischung keine Iminooxadiazindionstrukturen (Typ II).

100 Gew.-Teile des so hergestellten Stammlackes wurden mit 20 Gew.-Teilen des so hergestellten Härtergemisches vermischt. Der Lack hatte eine für die Praxis unzureichende Verarbeitungszeit von nur 180 Minuten (23°C).

Die Herstellung einer beschichteten Polyurethanhaut erfolgte wie in Beispiel 1 beschrieben. Die beschichtete Polyurethanhaut konnte nach Aushärtung unter den Bedingungen des Beispiels 1 (Formtemperatur 80°C, Ablüftzeit 100 sec, Aushärtungszeit 120 sec) problemlos entnommen werden.

### Beispiel 7

### Nicht erfindungsgemäßes Vergleichsbeispiel

Es wurde ein Stammlack wie in Beispiel 6 formuliert, jedoch wurde die Katalysatormenge Jeffcat ZR 50 auf 0,6% reduziert, um die Verarbeitungszeit auf praxistaugliche Werte zu verlängern. Der verarbeitungsfertige Lack hatte eine ausreichend lange Verarbeitungszeit von 300 Minuten. Die Herstellung einer beschichteten Polyurethanhaut erfolgte wie in Beispiel 1 beschrieben. Der Lack war unter diesen Bedingungen noch nicht ausgehärtet, bei Entnahme der Polyurethanhaut kam es zur partiellen Lackablösung.

Die Prüfergebnisse sind in Tabelle 1 zusammengestellt.

Der Katalysatorgehalt in den Vergleichsbeispielen 4 und 6 ist derart eingestellt, dass eine praxistaugliche Aushärtungszeit resultiert, die gleich der der erfindungsgemäßen Beispiele 1-3 ist und auch des Zykluszeit der maschinellen Fertigung entspricht. Dies führt, entgegen den erfindungsgemäßen Beispiel zu nicht mehr handhabbaren Verarbeitungszeiren. Demgegenüber wird durch die erfindungsgemäßen Lackformulierungen die Durchführung von In-Mold-Coating-Verfahren wesentlich verbessert.

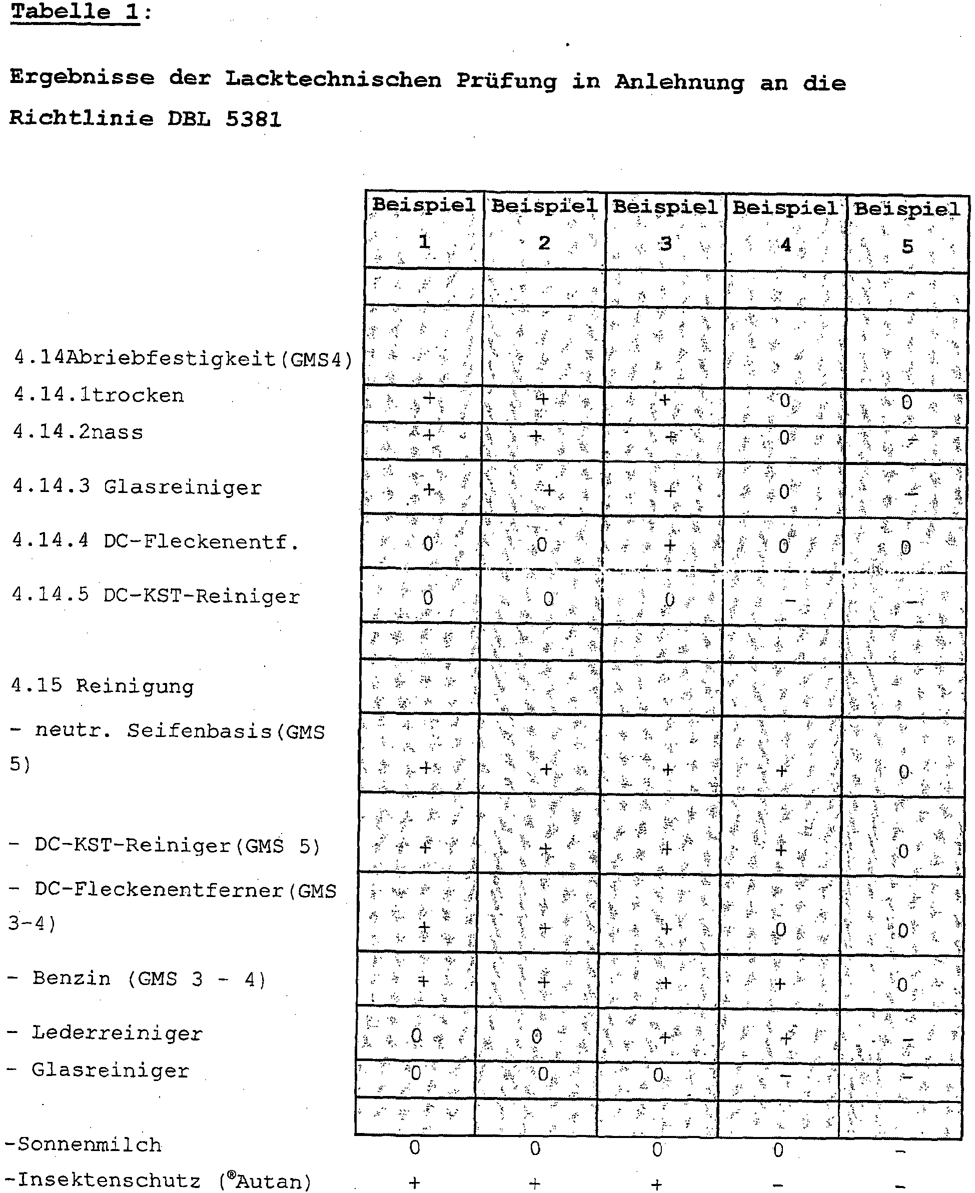

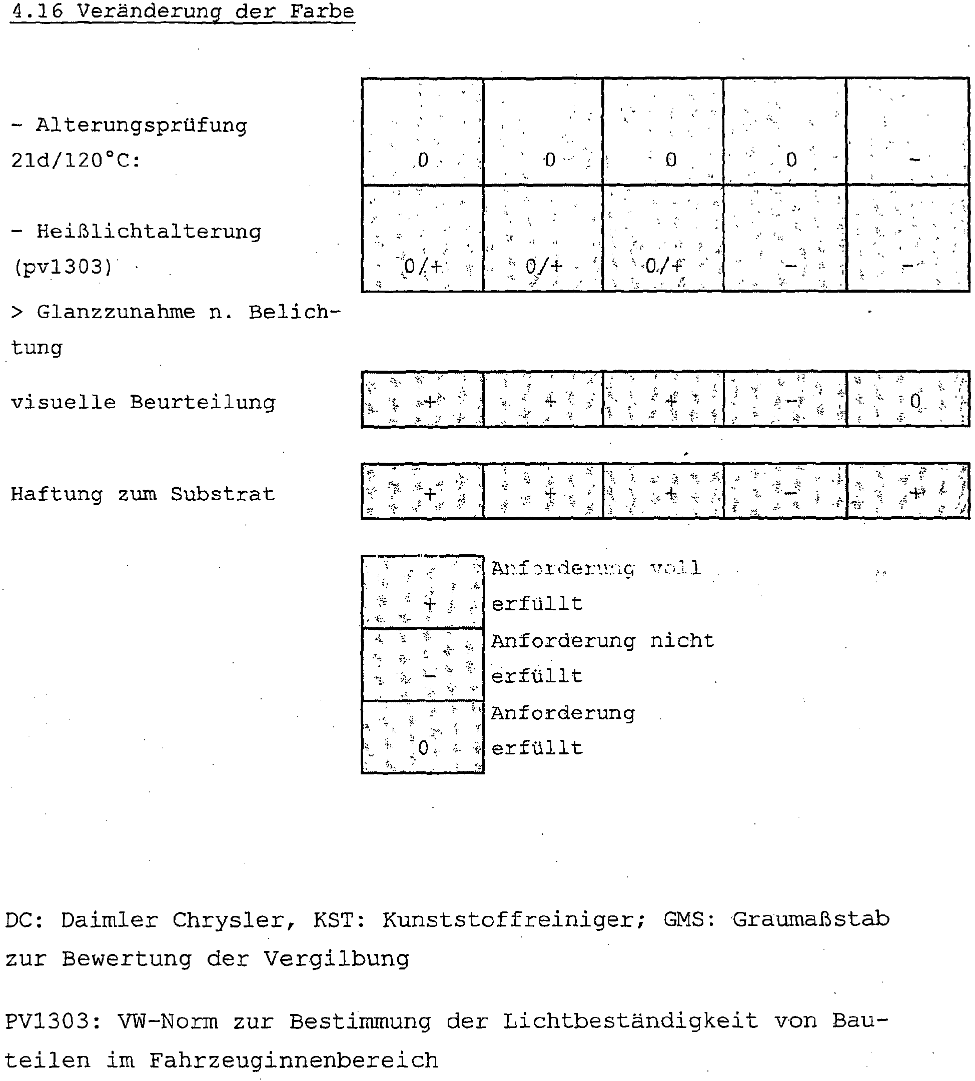

## Patentansprüche

1. In-Mold-Coating Verfahren zur Herstellung von Formteilen unter Verwendung wässriger 2-Komponenten-Lackformulierungen, enthaltend
A) 40 bis 90 Gew.-% (bezogen auf die Gesamtformulierung) mindestens einer wässrigen nichtfunktionellen oder hydroxyfunktionellen Harzdispersion,
B) 5 bis 40 Gew.-% (bezogen auf die Gesamtformulierung) mindestens einer Härterkomponente mit einem Gehalt an freien Isocyanatgruppen von 10 bis 23 Gew.-%, bezogen auf das Festharz, und
C) Füllstoffe, Pigmente, Hilfs- und Zusatzstoffe, wobei die Gew.-%-Angaben sich in 100 % ergänzen,
**dadurch gekennzeichnet, dass** die Komponente B) im wesentlichen aus Trimerisatgemischen auf Basis aliphatischer und/oder cycloaliphatischer Diisocyanate besteht, die anteilig Verbindungen vom Isocyanurattyp (Typ I) und Verbindungen vom Iminooxadiazindiontyp (Typ II) enthalten, wobei - bezogen auf die isomeren Trimerisatstrukturen - mindestens 10 Gew.-% % Verbindungen vom Iminooxadiazindiontyp (Typ II) enthalten sind.

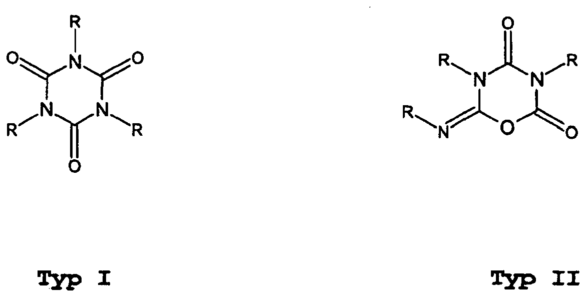

2. Verfahren gemäß Anspruch 1, **dadurch gekennzeichnet, dass** die Komponente B) wobei -bezogen auf die isomeren Trimerisatstrukturen - mindestens 15 Gew.-% Verbindungen vom Iminooxadiazindiontyp (Typ II) enthält.

3. Verfahren gemäß Anspruch 1, **dadurch gekennzeichnet, dass** die Komponente B) -bezogen auf die isomeren Trimerisatstrukturen - mindestens 20 Gew.-% Verbindungen vom Iminooxadiazindiontyp (Typ II) enthält.

4. Verfahren gemäß Anspruch 1, **dadurch gekennzeichnet, dass** die Komponente B) Verbindungen von Isocyanurattyp (Typ I) und Verbindungen vom Iminooxadiazindiontyp (Typ II) in einem Gewichtsverhältnis von 90:10 bis 50:50 enthält.

5. Verfahren gemäß einem der Ansprüche 1 bis 4, **dadurch gekennzeichnet, dass** die Komponente B) anionisch, kationisch oder nichtionisch hydrophil modifiziert ist.

6. Verfahren gemäß einem der Ansprüche 1 bis 5, **dadurch gekennzeichnet, dass** die Komponente A) aminische Reaktivkatalysatoren enthält.

7. Verfahren nach einem der Ansprüche 1 bis 6, **dadurch gekennzeichnet, dass** das Gew.-Verhältnis der Verbindungen vom Typ I und Typ II derart ist, dass nach Einbringung der Lackformulierung in einer Schichtdicke von 10 - 100 µm in die Form - und gegebenenfalls einer geeigneten Ablüftzeit - bei einer Formtemperatur von ≤ 80 °C die Trocknungszeit ≤ 4 min beträgt, um einen beschichteten Gegenstand herzustellen.

8. Verfahren gemäß einem der Ansprüche 1 bis 7, **dadurch gekennzeichnet, dass** das Formteil ein Automobilinnenraumteil ist.

9. Verfahren gemäß einem der Ansprüche 1 bis 7, **dadurch gekennzeichnet, dass** das Formteil eine Polyurethanhaut ist.

10. Automobilinnenraumteil, welches herstellbar oder hergestellt ist nach einem Verfahren nach Anspruch 8.

## Claims

1. In-mold coating method for the production of molded parts with the aid of an aqueous 2-component lacquer formulation, containing:
A) 40 to 90% by weight (in relation to the entire formulation) of at least one aqueous non-functional or hydroxy functional resin dispersion,
B) 5 to 40% by weight (in relation to the entire formulation) of at least one hardener component with a concentration of free isocyanate groups of 10 to 23% by weight, in relation to the solid resin, and
C) fillers, pigments, auxiliary materials and additives, wherein the stated % by weight supplement each other to make 100%,
**characterized in that** component B) substantially consists of trimerisate mixtures on the basis of aliphatic and/or cycloaliphatic diisocyanates proportionately containing compounds of the isocyanurate type (type I) and compounds of the imino-oxadiazine-dione type (type II), wherein there are contained - in relation to the isomeric trimerisate structures - at least 10% by weight of compounds of the imino-oxadiazine-dione type (type II).

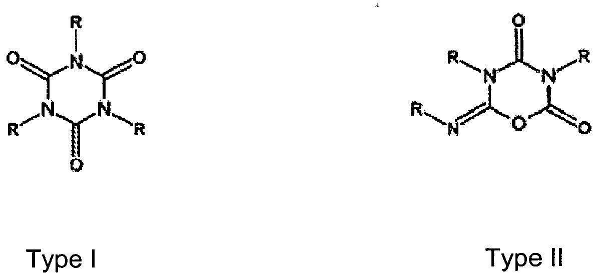

2. Method according to claim 1, **characterized in that** component B) - in relation to the isomeric trimerisate structures - contains at least 15% by weight of the imino-oxadiazine-dione type (type II).

3. Method according to claim 1, **characterized in that** component B) - in relation to the isomeric trimerisate structures - contains at least 20% by weight of the imino-oxadiazine-dione type (type II).

4. Method according to claim 1, **characterized in that** component B) contains compounds of the isocyanurate type (type I) and compounds of the imino-oxadiazine-dione type (type II) at a ratio of 90:10 to 50:50.

5. Method according to one of the claims 1 to 4, **characterized in that** component B) is anioanically, cationically or non-ionically hydrophilically modified.

6. Method according to one of the claims 1 to 5, **characterized in that** component A) contains aminic reactive catalysts.

7. Method according to one of the claims 1 to 6, **characterized in that** the weight ratio of the compounds of type I and type II is such that after filling said lacquer formulation at a layer thickness of 10 - 100 µm into the mold - where necessary with an appropriate airing time - the drying time amounts to ≤ 4 min at a mold temperature of ≤ 80°, for producing a coated article.

8. Method according to one of the claims 1 to 7, **characterized in that** the molded part is an interior space part of an automobile.

9. Method according to one of the claims 1 to 7, **characterized in that** the molded part is polyurethane skin.

10. Interior space part of an automobile that can be or is produced in accordance with a method as defined in claim 8.

## Revendications

1. Procédé d'enduisage dans le moule pour la fabrication de pièces moulées, à l'aide d'une préparation de vernis aqueuse à deux constituants, contenant:
A) 40 à 90% en poids (par rapport à la formulation totale) d'au moins une dispersion de résine aqueuse non-fonctionnelle ou hydroxyfonctionnelle,
B) 5 à 40% en poids (par rapport à la formulation totale) d'au moins un constituant de durcisseur avec une concentration de groupes isocyanates libres de 10 à 23% en poids, par rapport à la résine solide, et
C) des charges, pigments, matières consommables et additifs, lesdites données de % en poids se complétant pour donner 100% en poids,
**caractérisé en ce que** le constituant B) essentiellement consiste en mélanges de trimérisates à base de diiosocyantes aliphatique et/ou cycloaliphatique contenant de manière proportionelle des composés de type isocyanurate (type I) et composés de type imino-oxadiazinedione (type II), dans lequel sont contenus au moins 10% en poids de composés de type imino-oxadiazinedione (type II) - par rapport aux structures de trimérisates isomériques.

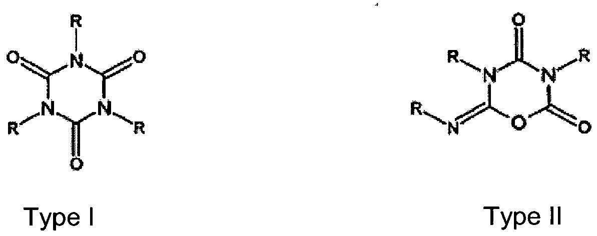

2. Procédé selon la revendication 1, **caractérisé en ce que** le constituant B) contient au moins 15% en poids de composés de type imino-oxadiazinedione (type II) - par rapport aux structures de trimérisates isomériques.

3. Procédé selon la revendication 1, **caractérisé en ce que** le constituant B) contient au moins 20% en poids de composés de type imino-oxadiazinedione (type II) - par rapport aux structures de trimérisates isomériques.

4. Procédé selon la revendication 1, **caractérisé en ce que** le constituant B) contient des composés de type isocyanurate (type I) et des composés de type imino-oxadiazinedione (type II) à un rapport de poids de 90 :10 à 50 :50.

5. Procédé selon l'une des revendications 1 à 4, **caractérisé en ce que** le constituant B) et modifié de manière anionique, cationique ou non anionique hydrophile.

6. Procédé selon la revendication 1, **caractérisé en ce que** le constituant A) contient des catalysateurs réactifs aminiques.

7. Procédé selon l'une des revendications 1 à 6, **caractérisé en ce que** le rapport de poids des composés de type I et de type II est de sorte qu'après la formulation de vernis à une épaisseur de couche de 10 - 100 µm à été versée dans le moule - en cas échéant avec une période de sortie d'air appropriée, la durée de déshydratation est ≤ 4 minutes à une température du moule de ≤ 80°C, pour fabriquer un article enduit.

8. Procédé selon l'une des revendications 1 à 7, **caractérisé en ce que** la pièce moulée et une pièce de l'intérieure d'une automobile.

9. Procédé selon l'une des revendications 1 à 7, **caractérisé en ce que** la pièce moulée et une peau de polyuréthane.

10. Pièce de l'intérieure d'une automobile, pièce qui peut être ou est fabriquée conformément au procédé selon la revendication 8.
